# EUROPEAN PATENT APPLICATION

(11) **EP 2 484 971 A1**
(43) Date of publication of application: **08.08.2012**
(21) Application number: 11153368.3
(22) Date of filing: 04.02.2011
(51) Int. Cl.: F23C 10/02, F23C 10/04, C10J 3/84, C10J 3/48

(54) **A process and a system for the gasification and/or combustion of biomass and/or coal with an at least partial carbon dioxide separation**

(71) Applicant: Paul Scherrer Institut, 5232 Villigen (CH)
(72) Inventor: Schildhauer, Tilman J., 5220, Brugg (DE)
(74) Representative: Fischer, Michael

(57) **Abstract**

A process for the gasification and/or combustion of biomass and/or coal with an at least partial carbon dioxide separation using a combined reactor (2) having a combustion part (6) and a gasification part (4), comprising the steps of:
a) feeding the coal and/or feeding biomass into the gasification part (4) of the combustion/gasification reactor (2);
b) in the gasification part (4) heating at an elevated temperature in order to generate a product gas (8);
c) filtering the product gas (8) to separate ash, soot and other solid particles from the product gas (8);
d) feeding the filtered product gas (8')and an oxidized bed material (20) into the combustion part (6) of the reactor (2);
e) in the combustion part (6), at least partially reducing the oxidized bed material (20) in order to generate heat that is being transferred partially into the gasification part (4);
f) leading the exhaust gas (16) of the combustion part (6) to a turbine or a heat exchanger or into a further combustion reactor (18) or a catalytic conversion and leading the at least partially reduced bed material (22) into an oxidation reactor 24 fed with air (26) in order to re-oxidize the bed material prior to its recirculation into the combustion part (6).

## Description

The present invention relates to a process and a system for the gasification and/or combustion of biomass and/or coal with an at least partial carbon dioxide separation using a combined reactor having a combustion part and a gasification part.

More and more the emission of carbon dioxide becomes an issue for the gasification and combustion of solid fuels, such as coal, dry biomass, refinery residue and the like. There will be a rising demand for the un-expensive and effective separation of carbon dioxide, e.g. to allow for efficient sequestration. This also applies for the combustion parts of allothermal gasifiers like the Fast Internal Circulating Fluidized Bet (FICFB-) Gasifier installed at Güssing, Austria, or the heat pipe reformer.

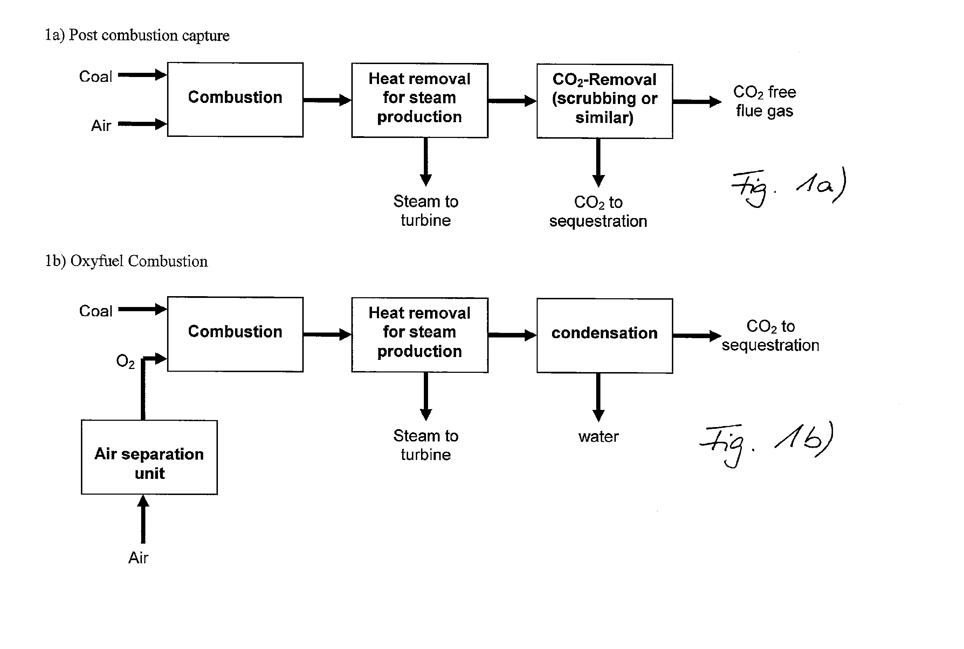

So far, separation of carbon dioxide in combustion procession is based on scrubbing of the flue gas downstream of the combustion (so-called post combustion capture, see figure 1a). The scrubbing and the regeneration of the scrubbing liquid is energy intensive and decreases the efficiency of power plants with such post combustion capture significantly.

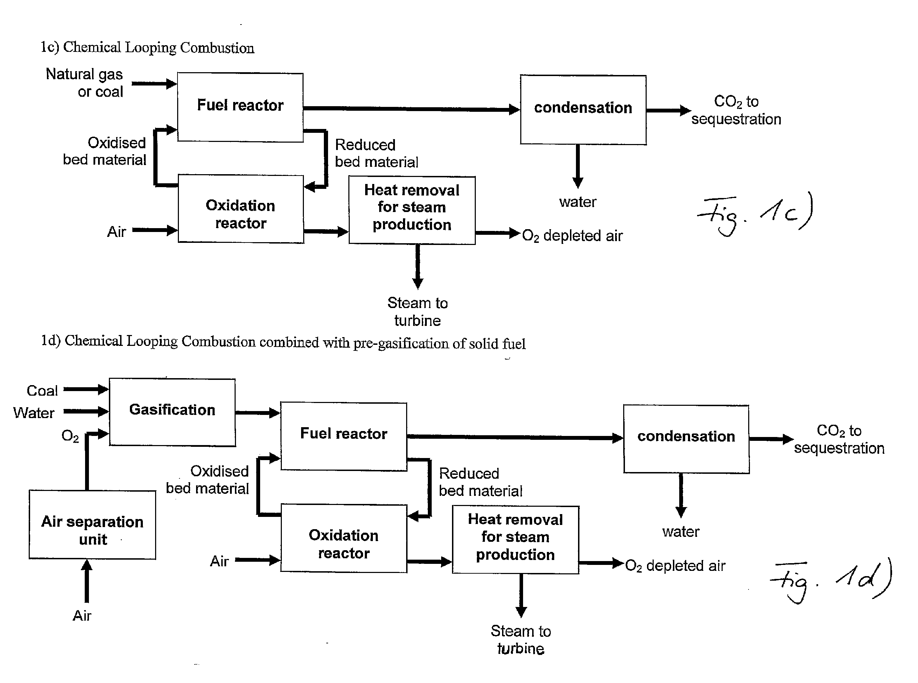

In order to achieve flows of rather neat carbon dioxide, beside the cost-extensive use of neat oxygen requiring an energy-intensive air separation (oxyfuel combustion, see figure 1b), the use of oxygen transfer materials in chemical looping processes is already known in the art (CLC = Chemical Looping Combustion, see figure 1c; CLG = Chemical Looping Gasification).

Unfortunately, most processes known in the art relate to the combustion of natural gas in contact with oxygen transfer materials in order to achieve a nitrogen-free exhaust gas facilitating the sequestration of the carbon dioxide. Unfortunately, the combustion of solid fuels is utterly challenging with respect to the CCS being superimposed by the need to separate the carbon dioxide at low cost and high efficiency.

Some solutions suggest a pre-gasification of the solid fuel upstream of the chemical looping combustion (see figure 1d). However, this solution again asks for an energy intensive air separation.

Other solutions describe the combination of the gasification of solid fuels with the internal combustion in the presence of oxygen transfer materials (Figure 1c). Two major drawbacks exist when allowing a direct physical contact among the solid fuel and the oxygen transfer material. First, a solid-solid reaction has to be established which has a rather low reactivity despite of the immediate gassing. Second, the oxygen transfer material is directly exposed to the ash and soot particles which may impair the stability of the bed material at long term. Further, when approaching or exceeding the melting point of the ash, the oxygen transfer material (bed material) may be prone to clogging which may lead to the complete failure of the reactor.

It is therefore the aim of the present invention to provide a process and a system for the gasification and/or combustion of biomass and/or coal with an at least partial carbon dioxide separation enabling an effective gasification as well as an un-expensive and effective separation of carbon dioxide thereby achieving a long-term stability of the materials used in the process and the system.

These objectives are achieved according to the present inventions by a process for the gasification and/or combustion of biomass and/or coal with an at least partial carbon dioxide separation using a combined reactor having a combustion part and a gasification part, said method comprising the steps of:
a) feeding the coal and/or feeding biomass into a gasification part of the combustion/gasification reactor;
b) in the gasification part, optionally under a feed of water, heating and optionally pressuring the coal and/or the biomass slurry at an elevated temperature and at an optionally elevated pressure in order to generate a product gas;
c) filtering the product gas to separate ash, soot and other solid particles from the product gas;
d) feeding the filtered product gas and an oxidized bed material into the combustion part of the reactor;
e) in the combustion part, at least partially reducing the oxidized bed material by combusting at least partially the filtered product gas in order to generate heat that is being transferred partially into the gasification part;
f) leading the exhaust gas of the combustion part to a turbine or a heat exchanger or into a further combustion reactor or into a catalytic gas conversion and guiding the at least partially reduced bed material into an oxidation reactor fed with air in order to re-oxidize the bed material prior to its recirculation into the combustion part.
With respect to the system these objectives are achieved by a system according to claim 13.

This process and this system guarantee an effective gasification of the raw materials as well as an effective and un-expensive separation of carbon dioxide which is leaving as exhaust gas the combustion part. Filtering ash, soot and other solid particles avoids the danger of clogging the bed material in the combustion part and therefore yields a long term stability of the bed material. In particular, the reaction path using the further combustion reactor separates the partial combustion of the product gas in the combustion part for heating the gasification part (e.g. heat transfer by heatpipes) from the entire combustion of the partially fuel-depleted product gas when entering into the further combustion reactor. This separation allows to operate the almost only carbon dioxide and water steam comprising exhaust gas of the further combustion reactor at a significantly higher temperature yielding a significant efficiency gain when expanding this gas in a power turbine.

In order to improve the efficient use of the raw material employed, ash, soot and the other solid particles filtered can be at least partially re-fed into the gasification part allowing both heat recovery and a rather complete fuel exhaustion.

The efficiency of the process strongly depends on the right choice for the bed material. Preferably, the bed material is an oxygen transfer material being able to provide the desired amount of oxygen to control the heat transferred to the gasification part. The bed material furthermore requires a good high temperature stability as well as a good thermo-dynamical efficiency in the redox cycle. Therefore, the bed material can be preferably selected from a group of bulk or supported materials containing Cu, Fe, Mn, Ni, Si, Al, Mg, Ca, Ti, La, Ce and/or Zr, their oxides, hydroxides, silicates, carbonates, sulphides or sulphates as well as any mixture thereof.

The overall efficiency of the present process can be further improved when the exhaust gas of the oxidation reactor (which is fed with air) is expanded in turbine or is used to transfer heat into a heat exchanger.

In order to achieve a complete exploitation of the filtered product gas, it is important that an excess supply of oxygen can be offered to the already fuel-depleted product gas. Therefore, a further preferred embodiment of the present invention comprises the step of first feeding the freshly re-oxidized bed material into the further combustion reactor and subsequently into the combustion part as seen in the material flow direction of the bed material.

In order to benefit from the energy inherent to the exhaust gas of either the combustion reactors, the process may comprise the step of expanding the exhaust gas of the combustion reactor and/or of the further combustion reactor in a turbine or using it to transfer heat to a heat exchanger or using it for at least partial further combustion in a fuel cell. Alternatively, the exhaust gas of the combustion reactor and/or of the further combustion reactor may be used in a catalytic conversion such as methanation, Fischer-Tropsch-synthesis, synthesis of alcohols and ethers or similar, optionally feeding the gas via gas cleaning and/or gas conditioning units.

Further advantageous embodiments of the present invention are dedicated to select the operating conditions and the bed material in a way that sulphur and/or alkali or heavy metal species can be transported from the combustion reactors and/or the further combustion reactor to the oxidation reactor where they are at least partially released. Furthermore, the operation conditions and the bed material may be chosen such that tars, organic sulphur species and/or hydrocarbons are reformed or decomposed.

Another advantageous example of the present invention is achievable when part of the product gas is directly fed to the exhaust of the combustion reactor.

Preferably, the heat generated in the combustion reactor is transferred to the gasification reactor by means of a suited heat transfer device such as heat pipes. Heat pipes are in particular a preferred media to transfer heat from the combustion reactor to the gasification reactor without transferring oxygen into the gasification reactor. Alternatively, the heat required for the gasification can be transferred from the oxidation reactor or the further combustion reactor to the gasification reactor.

Furthermore, the fuel containing gas streams from a downstream use of the exhaust gases of the combustion reactors and/or the further combustion reactor, e.g. from a catalytic conversion or an at least partial further combustion in a fuel cell, may be fed to the combustion reactors and/or the further combustion reactor.

Preferred embodiments of the present invention are hereinafter described with reference to the following drawings which depict in:
- Figure 1: Schematic representations of different process chains related to carbon dioxide capture in combustion and gasification processes a) to d);
- Figure 2: a schematic concept for the Chemical Looping Combustion of solid fuels with integrated purification of the hot product gas; and
- Figure 3: illustrates the alternative concept of the Chemical Looping Gasification without the use of the further combustion reactor.

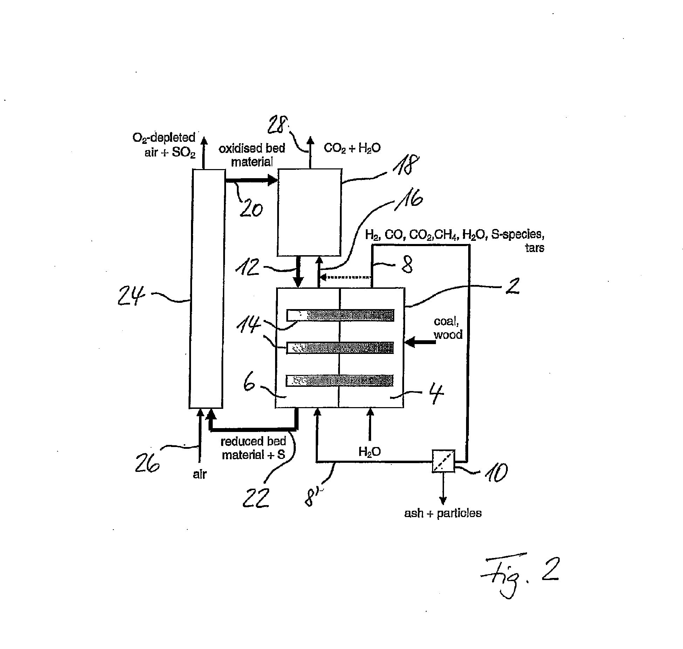

The concept of the Chemical Looping Combustion (CLC) of solid fuels, such as coal, biomass, sewage sludge, abattoir refuse and the like, shown in Figure 2, illustrates a process for the gasification and/or combustion of biomass and/or coal with an at least partial carbon dioxide separation using a combined reactor 2 having a gasification part 4 and a combustion part 6. The coal and/or biomass is fed into the gasification part 4 of the combustion/gasification reactor 2 which is built as an allothermal gasifier. In the gasification part 4, usually under an additional feed of water/water vapour, the coal and/or the biomass is gasified at an elevated temperature (500 - 1200°C) and at an optionally elevated pressure (<10 bar) in order to generate a product gas 8 comprising typically hydrogen, carbon monoxide, methane, water vapour, S-species, tars, hydrocarbons (e.g. olefins or aromatic compounds), ash, soot and other solid particles. The product gas 8 is led to a filter 10 separating the product gas 8 from its solid components, such as the ash, the soot and other solid particles. The filtered particles can be recycled into the gasification part 4.

The filtered product gas 8' is fed as well as an already partially reduced primarily oxidized bed material 12 into the combustion part 6 of the reactor 2. In the combustion part 6, the already partially reduced oxidized bed material 12 is further reduced at elevated temperatures (>500°C) thereby at least partially combusting the filtered product gas 8' in order to generate heat that is consumed both for the combustion and the transfer via heatpipes 14 (or other suited heat transfer devices) into the gasification part 4 (allothermal gasification). The bed material comprises grains having a particle size of 0.1 mm to 35 mm in order to enable a fluidized or moving bed reactor in the combustion part. The bed material is selected from a group of bulk or supported materials containing Cu, Fe, Mn, Ni, Si, Al, Mg, Ca, Ti, La, Ce and/or Zr, their oxides, hydroxides, silicates, carbonates, sulphides or sulphates as well as any mixture thereof. Beside its potentially catalytic activity (e.g. for tar reforming), the bed material is used as an oxygen transfer material that provides the oxygen necessary for the at least partial combustion of the filtered product gas 8'. The oxidation of the fuel components in the filtered product gas 8', such as hydrogen, carbon monoxide, methane and the higher hydrocarbons, thereby comes with the reduction of the bed material. The material flow rate of the bed material as well as the flow rate of the filtered product gas 8' is set to meet the demand of heat for the heat pipes.

A further option (depending on the operation condition and the properties of the bed material) is the use of the bed material as sulphur transfer material, e.g. by sulphidation during the at least partial reduction of the bed material in presence of the filtered product gas 8' and subsequent oxidation of the bed material with inherent SO2-formation in the oxidation reactor 24.

The almost fuel-depleted exhaust gas 16 of the combustion part 6 can either be expanded in a turbine (not shown) or used in heat exchanger (not shown) or is fed into a further combustion reactor 18. In the present example, the flow of freshly oxidized bed material 20 is fed into the further combustion reactor 18 in order to combust the remaining fuel components of the almost fuel-depleted exhaust gas 16. Again, the bed material 20 provides the oxygen necessary for this combustion in order to guarantee the process to be nearly free of nitrogen. The at least partially reduced bed material 22 is then fed into an oxidation reactor 24 fed with air 26 in order to re-oxidize the bed material prior to its recirculation into the combustion part 6 or the further combustion reactor 18. The exhaust gas 28 of the further combustion reactor 18 is finally completely free of fuel components and optionally depleted in sulphur species and comprises mainly carbon dioxide and water as main components. Herewith, the goal of an almost completely separated flow of carbon dioxide in the gasification of solid fuels is achieved. The exhaust gas 28 which is nearly free of nitrogen can then be passed to a turbine expansion for power generation. It is also possible to add further fuel or a part of the product gas 8 directly into the further combustion reactor 18 in order to increase the temperature in this combustion step for improving the efficiency of the exhaust gas 28 during turbine expansion.

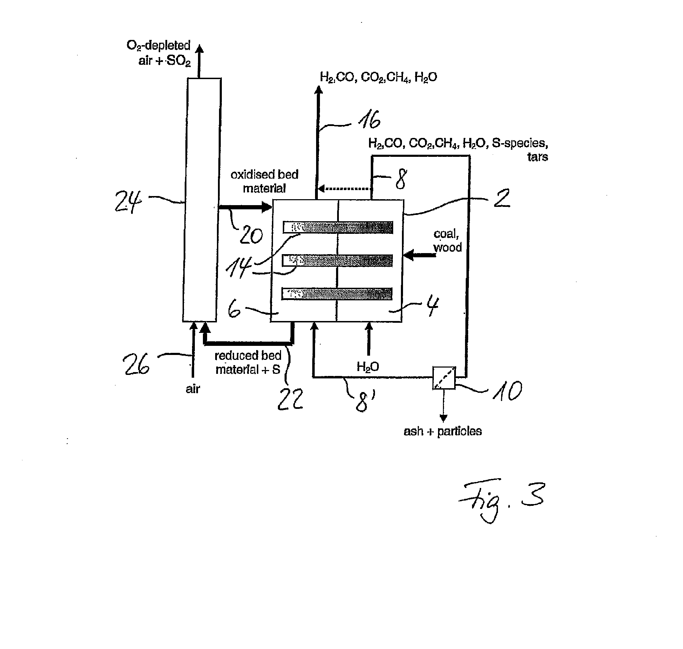

Figure 3 illustrates the concept of the Chemical Looping Gasification without the use of the further combustion reactor 18 as depicted in Figure 2. This concept is rather similar to the concept shown in Figure 2. The already partially fuel-depleted exhaust gas 16 of the combustion part 6 is here available for further thermo-chemical or catalytic treatment like methanation, methanol-, Fischer-Tropsch or DME-synthesis or the like, optionally feeding via gas cleaning and/or gas conditioning units.

## Claims

1. A process for the gasification and/or combustion of biomass and/or coal with an at least partial carbon dioxide separation using a combined reactor (2) having a combustion part (6) and a gasification part (4), comprising the steps of:
a) feeding the coal and/or feeding biomass into the gasification part (4) of the combustion/gasification reactor (2);
b) in the gasification part (4), optionally under a feed of water or water vapour, heating and optionally pressuring the coal and/or the biomass at an elevated temperature and at an optionally elevated pressure in order to generate a product gas (8);
c) filtering the product gas (8) to separate ash, soot and other solid particles from the product gas (8);
d) feeding the filtered product gas (8')and an at least partially oxidized bed material (20) into the combustion part (6) of the reactor (2);
e) in the combustion part (6), at least partially reducing the oxidized bed material (20) by at least partially combusting the filtered product gas in order to generate heat that is being transferred partially into the gasification part (4);
f) leading the exhaust gas (16) of the combustion part (6) to a turbine or a heat exchanger or into a further combustion reactor (18) and leading the at least partially reduced bed material (22) into an oxidation reactor 24 fed with air (26) in order to at least partially re-oxidize the bed material prior to its recirculation into the combustion part (4).

2. The process according to claim 1, wherein the ash, soot and the other solid particles filtered are at least partially re-fed into the gasification part (4).

3. A process according to claim 1 or 2, wherein the bed material (20) is an oxygen transfer material, preferably selected from a group of bulk or supported materials containing Cu, Fe, Mn, Ni, Si, Al, Mg, Ca, Ti, La, Ce and/or Zr, their oxides, hydroxides, silicates, carbonates, sulphides or sulphates as well as any mixture thereof.

4. The process according to any of the preceding claims, wherein the exhaust gas of the oxidation reactor (24) is expanded in a turbine or is used to transfer heat to a heat exchanger.

5. A process according to any of the preceding claims, wherein the freshly re-oxidized bed material (20) is fed first into the further combustion reactor (18) and subsequently into the combustion part (6) as seen in the material flow direction of the bed material.

6. The process according to any of the preceding claims, wherein the exhaust gas of the combustion reactor (6) and/or of the further combustion reactor (18) is expanded in a turbine or is used to transfer heat to a heat exchanger or for at least partial further combustion in a fuel cell.

7. The process according to any of the preceding claims, wherein the exhaust gas of the combustion reactor (6) and/or of the further combustion reactor (18) is used in a catalytic conversion such as methanation, Fischer-Tropsch-synthesis, synthesis of alcohols and ethers or similar, optionally feeding the gas via gas cleaning and/or gas conditioning units.

8. The process according to any of the preceding claims, wherein the operation conditions and the bed material are chosen such that sulphur and/or alkali or heavy metal species can be transported from the combustion reactors (6) and/or (18) to the oxidation reactor (24) where they are at least partially released.

9. The process according to any of the preceding claims, wherein the operation conditions and the bed material are chosen such that tars, organic sulphur species and/or hydrocarbons are reformed or decomposed.

10. The process according to any of the preceding claims, wherein part of the product gas (8) is directly fed to the exhaust (16) of the combustion reactor (6).

11. The process according to any of the preceding claims, wherein the heat generated in the combustion reactor (6) is transferred to the gasification reactor (2) by means of a suited heat transfer device such as heat pipes.

12. The process according to any of the preceding claims, wherein fuel containing gas streams from a downstream use of the exhaust gases (16) or (28) of the combustion reactors (6 and/or 18), e.g. from a catalytic conversion or an at least partial further combustion in a fuel cell, is fed to the combustion reactors (6 and/or 18).

13. A system for the gasification and/or combustion of biomass and/or coal with an at least partial carbon dioxide separation using a combined reactor (2) having a combustion part (6) and a gasification part (4), comprising:
a) a feeder to feed the coal and/or the biomass into the gasification part (4) of the combustion/gasification reactor (2);
b) in the gasification part (4), optionally under a feed of water or water vapour, heating and optionally pressuring the coal and/or the biomass at an elevated temperature and at an optionally elevated pressure in order to generate a product gas (8);
c) a filter to filter the product gas (8) to separate ash, soot and other solid particles from the product gas (8);
d) at least one duct to feed the filtered product gas (8')and an at least partially oxidized bed material (20) into the combustion part (6) of the reactor (2);
e) in the combustion part (6), at least partially reducing the oxidized bed material (20) by at least partially combusting the filtered product gas in order to generate heat that is transferred by heat transfer means at least partially into the gasification part (4);
f) at least one further duct to lead the exhaust gas (16) of the combustion part (6) to a turbine or a heat exchanger or into a further combustion reactor (18) and to lead the at least partially reduced bed material (22) into an oxidation reactor 24 fed with air (26) in order to at least partially re-oxidize the bed material prior to its recirculation into the combustion part (4).
